# EUROPÄISCHE PATENTSCHRIFT

(11) **EP 3 279 540 B1**
(45) Veröffentlichungstag und Bekanntmachung des Hinweises auf die Patenterteilung: **02.01.2019**
(21) Anmeldenummer: 17181599.6
(22) Anmeldetag: 17.07.2017
(51) Int. Cl.: F16L 37/088

(54) **STECKVERBINDUNG FÜR ROHRLEITUNGEN MIT INDIKATORRING**
PLUG-IN COUPLING FOR PIPES WITH INDICATOR RING
RACCORD ENFICHABLE POUR CONDUITES AVEC BAGUE INDICATRICE

(30) Priorität: 01.08.2016 DE 102016114149
(43) Veröffentlichungstag der Anmeldung: 07.02.2018
(73) Patentinhaber: Johannes Schäfer vormals Stettiner Schraubenwerke GmbH & Co. KG, 35410 Hungen (DE)
(72) Erfinder: FORRO, Norbert, 35447 Reiskirchen (DE)
(74) Vertreter: Haarpatent Patentanwälte Krämer Meyer

(56) Entgegenhaltungen:
- EP-A1- 0 947 759
- DE-A1-102013 105 253
- DE-U1-202006 018 794

## Beschreibung

Die Erfindung betrifft eine Steckverbindung umfassend ein rohrförmiges Innenteil und ein eine Öffnung aufweisendes Außenteil, wobei das Innenteil in die Öffnung des Außenteils einsteckbar und in einer Verbindungsstellung in der Öffnung des Außenteils mittels eines in radialer Richtung verformbaren Halteelements mit dem Außenteil verbindbar ist, wobei das Innenteil über die Verbindungsstellung hinaus etwas tiefer in die Öffnung des Außenteils hinein bewegbar ist und wobei ein elastisch aufweitbarer Indikatorring vor dem Verbinden des Innenteils mit dem Außenteil in einer Bereitschaftsposition auf dem Innenteil angeordnet ist und beim Verbinden des Innenteils mit dem Außenteil aus der Bereitschaftsposition in eine Anzeigeposition verlagert werden kann, wobei das Innenteil eine zwischen der Bereitschaftsposition und der Anzeigeposition angeordnete Ringschulter mit einem Scheitelabschnitt aufweist und der Indikatorring im nicht aufgeweiteten Zustand einen Innendurchmesser hat, der kleiner ist als der Außendurchmesser des Scheitelabschnitts, wobei auf dem Innenteil ein Löseelement axial verschiebbar angeordnet ist, durch welches das Halteelement aus der Verbindungsstellung in eine Lösestellung bewegbar ist, wobei das Löseelement einen radialen Flansch aufweist, an der der Indikatorring anliegt, wenn er in der Bereitschaftsposition angeordnet ist, wobei zwischen dem Flansch und dem Außenteil ein Federelement angeordnet ist, welches das Löseelement ringförmig umgreift und einem Eindringen des Löseelements in das Außenteil federnd entgegenwirkt und wobei das Löseelement gegen die Kraft des Federelements in eine das Lösen des Halteelements bewirkende Lösestellung bewegbar ist, in der das Innenteil von dem Außenteil lösbar ist.

Eine Steckverbindung der angegebenen Art ist aus DE 10 2013 105 253 A1 bekannt. Bei der bekannten Steckverbindung bildet das Innenteil die zwischen der Bereitschaftsposition und der Anzeigeposition angeordnete Ringschulter mit Scheitelabschnitt, die auf der dem Einsteckende zugekehrten Seite eine sich in Richtung des Einsteckendes verjüngende erste Rampenfläche und auf der dem Einsteckende abgekehrten Seite eine sich in der vom Einsteckende entfernenden Richtung verjüngende zweite Rampenfläche aufweist. Der Indikatorring liegt in der Bereitschaftsstellung an der ersten Rampenfläche und einer dieser gegenüber liegenden Schulter des Löseelements an und wird beim Verbinden des Innenteils mit dem Außenteil durch Verlagerung des Löseelements gegenüber dem Innenteil entgegen der Einsteckrichtung über den Scheitelabschnitt auf die zweite Rampenfläche gedrückt, auf der der Indikatorring sich zusammenziehend radial nach innen in eine Ringnut auf der Außenseite des Innenteils gleitet, welche die Anzeigeposition des Indikatorrings bestimmt. Das zuverlässige Verschieben des Indikatorrings in die Anzeigeposition erfordert eine Relativbewegung des Löseelements gegenüber dem Innenteil mit einer verhältnismäßig großen Federkraft des Federelements, wodurch das Verbinden und auch das Lösen der Steckverbindung erschwert werden. Außerdem ist eine gegenseitige Abstimmung der Federwirkungen des Indikatorrings, des Federelements und des am Löseelement anliegenden Dichtrings erforderlich.

Der Erfindung liegt die Aufgabe zugrunde, eine Steckverbindung der angegebenen Art im Hinblick auf die zum Verbinden und Lösen von Innenteil und Außenteil erforderliche Kraft zu verbessern und das Erreichen des Verbindungszustands zwischen Innenteil und Außenteil zuverlässig und noch besser erkennbar anzuzeigen.

Die Aufgabe wird nach der Erfindung durch eine Steckverbindung mit den in Anspruch 1 angegebenen Merkmalen gelöst. Vorteilhafte Weiterbildungen der Erfindung sind in den Unteransprüchen angegeben.

Bei der Steckverbindung nach der Erfindung bildet der Flansch des Löseelements mit einem radial äußeren Rand den Scheitelabschnitt und der Indikatorring ist in der Bereitschaftsposition zwischen dem Flansch und dem Federelement angeordnet und kann beim Verbinden des Innenteils mit dem Außenteil durch das Federelement aus der Bereitschaftsposition in die Anzeigeposition verlagert werden, die auf der dem Federelement abgewandten Seite des Flansches liegt. Das Federelement drückt hierbei unmittelbar gegen den Indikatorring und dieser kann, ohne dass es hierzu der Federwirkung des Federelements bedarf, mit wenig Kraftaufwand über den Scheitelabschnitt bewegt werden. Das Löseelement kann von Anfang an in die hintere Endstellung auf dem Innenteil gebracht werden, in der es an einer Schulter des Innenteils anliegt und von einem Dichtring reibschlüssig festgehalten wird. Ein Verschieben des Löseelements gegenüber dem Innenteil unterbleibt. Das Bewegen des Indikatorrings in die Anzeigeposition ist nicht von der Federsteifigkeit des Dichtrings und nur wenig von der Federsteifigkeit des Federelements abhängig, so dass sich ein Abstimmen der Federwirkungen von Indikatorring und Federelement in der Regel erübrigt. Das Federelement kann weicher ausgelegt werden, so dass die Kräfte zum Verbinden und Lösen der Steckverbindung kleiner sein können. Schließlich ermöglicht die Erfindung eine Verringerung der Baulänge des Innenteils, da die Ringschulter mit den entgegengesetzt geneigten Ringflächen entfällt.

Bei der Steckverbindung nach der Erfindung wird der Indikatorring durch eine beim Stecken zwangsläufig eintretende, ruckartige Relativbewegung, bei der das Innenteil etwas über die Verbindungsstellung hinaus tiefer in das Außenteil eindringt, in die Anzeigeposition gebracht. Hierdurch wird erreicht, dass der Indikatorring nur dann in die Anzeigeposition gelangt, wenn das Halteelement die Verriegelungsstellung, in der Innenteil und Außenteil miteinander verbunden sind, eingenommen hat.

Um den Unterschied zwischen richtig und nicht richtig verbundenem Verbindungszustand noch deutlicher sichtbar zu machen, kann nach einem weiteren Vorschlag der Erfindung das Innenteil auf seiner Außenseite in einem von dem Indikatorring in der Anzeigeposition verdeckten Bereich eine farblich gekennzeichnete Signalfläche aufweisen. Vorzugsweise ist die Signalfläche von der Außenfläche eines Signalrings gebildet, der in einer Ringnut in der Außenseite des Innenteils angeordnet ist. In der Bereitschaftposition ist die Signalfläche sichtbar, in der Anzeigeposition ist sie von dem Indikatorring verdeckt. Der Signalring kann mit einem Teil seiner Mantelfläche aus der Ringnut herausragen, so dass er auch aus einer zur Längsachse geneigten Blickrichtung gut zu sehen ist.

Als Indikatorring kann vorzugsweise ein O-Ring aus Elastomer verwendet werden. Der Innendurchmesser des O-Rings im entspannten Zustand kann 10% bis 30% kleiner sein als der Außendurchmesser des Scheitelabschnitts des Flansches. Alternativ kann der Indikatorring ein geschlitzter Ring aus Metall oder Kunststoff sein.

Es ist weiterhin vorteilhaft, wenn das Federelement ein elastischer Dichtring aus Elastomer ist. Im entspannten Zustand kann der Dichtring einen Innendurchmesser haben, der kleiner ist als der Außendurchmesser des Löseelements. Im verbundenen Zustand der Steckverbindung dichtet der Dichtring die Öffnung des Außenteils nach außen ab. Es ist auch vorteilhaft, wenn der Schnurdurchmesser des Dichtrings kleiner ist, als der Schnurdurchmesser des Indikatorrings. Die Kontaktfläche zwischen dem Dichtring und dem Indikatorring ist dann konisch, wodurch das Aufweiten und Verlagern des Indikatorrings erleichtert wird. Vorzugsweise ist der Schnurdurchmesser des Dichtrings 30% bis 50% kleiner als der Schnurdurchmesser des Indikatorrings.

Das Löseelement kann nach der Erfindung einen konischen, sich in Richtung des Einsteckendes des Innenteils verjüngenden Abschnitt haben, wobei sich an den großen Durchmesser des konischen Abschnitts der Flansch anschließt, der sich radial nach außen erstreckt. Weiterhin kann das Innenteil auf der dem Federelement abgewandten Seite des Flansches und in einem Abstand von dem Flansch eine sich radial nach außen erstreckende Schulter aufweisen, die den Indikatorring am Verlassen der Anzeigestellung hindert. Die Schulter kann von einem an dem Innenteil befestigten Anschlusselement gebildet sein.

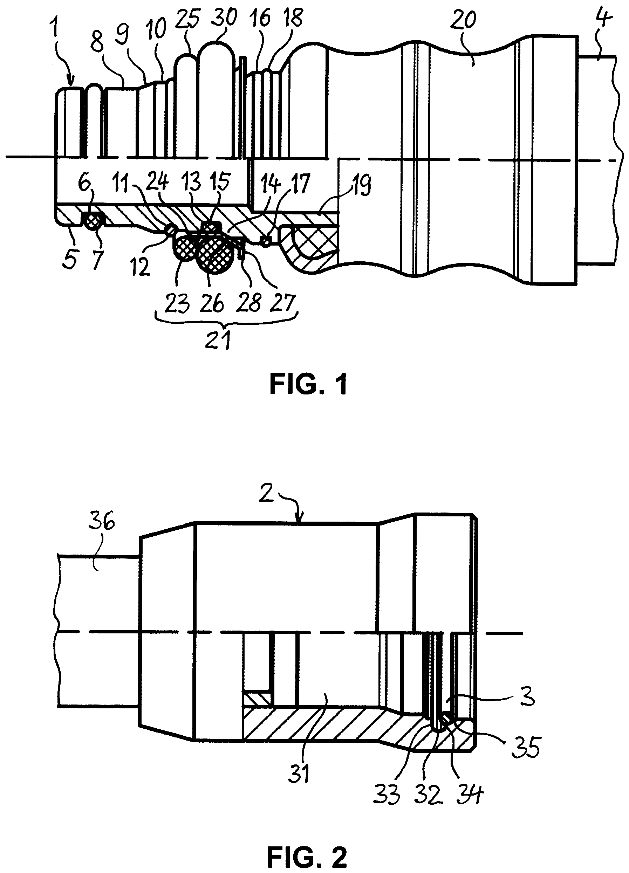

Die Erfindung wird nachfolgend anhand eines Ausführungsbeispiels der Erfindung näher erläutert, das in der Zeichnung dargestellt ist. Es zeigen
- Figur 1: eine Ansicht des Innenteils einer Steckverbindung nach der Erfindung, halbseitig geschnitten,
- Figur 2: eine Ansicht des Außenteils einer Steckverbindung nach der Erfindung, halbseitig geschnitten,
- Figur 3: einen Halbschnitt einer ersten Stellung der ineinander gesteckten Teile der Steckverbindung gemäß den Figuren 1 und 2,
- Figur 4: einen Halbschnitt einer zweiten Stellung der ineinander gesteckten Teile der Steckverbindung gemäß den Figuren 1 und 2 und
- Figur 5: einen Halbschnitt der Verbindungsstellung der ineinander gesteckten Teile der Steckverbindung gemäß den Figuren 1 und 2.

Die in der Zeichnung dargestellte Steckverbindung besteht aus einem Innenteil 1 und einem Außenteil 2, die durch ein Halteelement 3 miteinander verbindbar sind, das in dem Außenteil angeordnet ist. Das Innenteil 1 hat die Form eines Rohrstücks und ist an dem in der Zeichnung rechten Ende mit einer Druckleitung 4 verbunden. Das andere Ende des Innenteils 1 ist als Einsteckende 5 ausgebildet, das in einer Ringnut 6 einen Dichtring 7 trägt. Die Ringnut 6 befindet sich in einem zylindrischen Endabschnitt 8 der Außenfläche des Einsteckendes 5. An den Endabschnitt 8 schließt sich eine Kegelfläche 9 an, die in eine Zylinderfläche 10 größeren Durchmessers übergeht. In der Zylinderfläche 10 ist eine Nut 11 ausgebildet, in der sich ein Abstützelement 12 befindet. Das Abstützelement 12 ist ein geschlitzter, elastisch verformbarer Runddraht-Sprengring, z.B aus rostfreiem Federstahl, Federbronze oder Kunststoff. Es greift mit der radial inneren Hälfte seines Querschnitts in die an seine Querschnittsform angepasste Nut 11 ein.

Auf der dem Endabschnitt 8 abgewandten Seite der Nut 11 endet die Zylinderfläche 10 an einer Nut 13 mit einem darin angeordneten Dichtring 15. Auf die Nut 13 folgt eine konische Schulter 14, anschließend ein zylindrischer Abschnitt und danach eine Ringschulter 16 mit einer Nut 17, die einen Signalring 18 von auffälliger Farbe, z.B. rot, enthält. An die Ringschulter 16 schließt sich, durch eine Stufe abgesetzt, ein dünnerer Hülsenabschnitt 19 an, auf den die Druckleitung 4 aufgesteckt und mittels einer Klemmhülse 20 befestigt ist.

Auf der Zylinderfläche 10 des Innenteils 1 ist axial verschiebbar ein hülsenförmiges Löseelement 21 angeordnet. Das Löseelement 21 hat einen zylindrischen Abschnitt 23 mit einer dem Abstützelement 12 zugekehrten Stirnfläche 24 und auf der entgegengesetzten Seite einen konischen Abschnitt 26, dessen Durchmesser mit der Entfernung vom zylindrischen Abschnitt 23 zunimmt. An das Ende größeren Durchmessers des Abschnitts 26 schließt sich ein Flansch 27 an, der sich radial nach außen erstreckt und dessen äußerer Rand einen Scheitelabschnitt 28 bildet. Mit dem konischen Abschnitt 26 liegt das Löseelement 21 an der konischen Schulter 14 an.

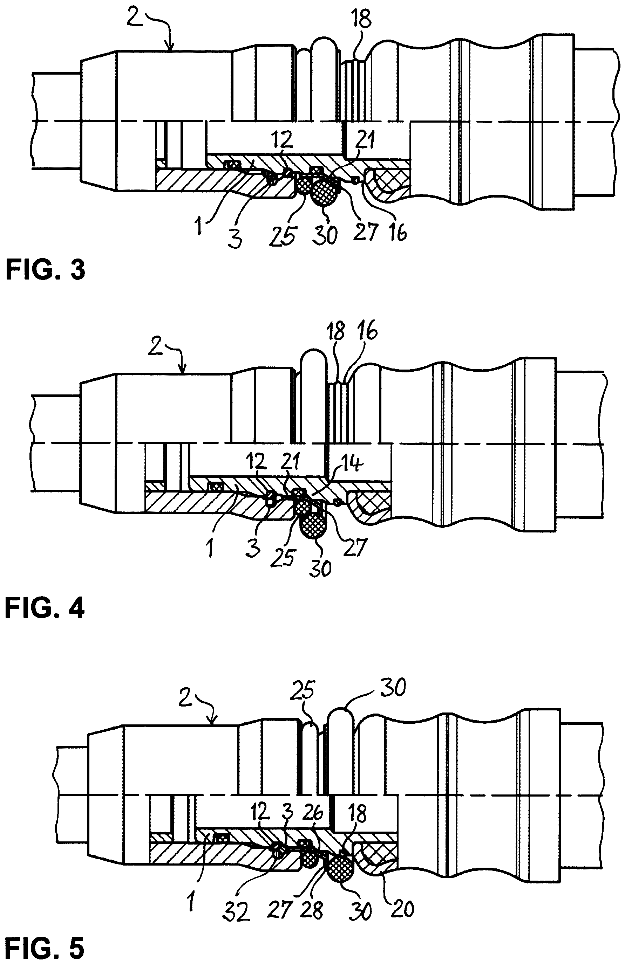

Auf dem Löseelement 21 ist ein ringförmiges Federelement 25 aus einem elastomeren Material angeordnet, das sich an dem konischen Abschnitt 26 abstützen kann. Das Federelement 25 ist als O-Ring ausgebildet. Es umspannt das Löseelement 21 mit radialer Vorspannung, die durch einen im entspannten Zustand gegenüber dem Außendurchmesser des zylindrischen Abschnitts 23 kleineren Innendurchmesser des Federelements 25 erreicht wird. Der konische Abschnitt 26 hat vorzugsweise einen Kegelwinkel von 60°. Je nach Elastizität des Federelements 25 kann der Kegelwinkel aber größer oder kleiner bemessen sein. Die axiale Länge des konischen Abschnitts 26 ist im Wesentlichen gleich der axialen Dicke des Federelements 25, wobei das Federelement 25 in der in Figur 5 dargestellten Verbindungsstellung der Steckverbindung nur etwa mit der Hälfte seiner axialen Dicke den konischen Abschnitt 26 umgibt.

Auf dem konischen Abschnitt 26 befindet sich zwischen dem Flansch 27 und dem Federelement 25 ein Indikatorring 30. Der Indikatorring 30 kann als O-Ring ausgebildet sein und in entspanntem Zustand einen Innendurchmesser haben, der 10% bis 30% kleiner ist als der Außendurchmesser des Scheitelabschnitts 28 der Flansches 27. Der Indikatorring 30 kann aber auch als geschlitzter Kunststoffring oder metallischer Federring, z.B. Wurmfederring, ausgeführt sein. Außerdem kann der Indikatorring 30 eine gut erkennbare Signalfarbe, z.B. grün, haben, die ihn von dem Signalring deutlich unterscheidet und auf einen richtigen Verbindungszustand hinweist.

Zur Aufnahme des Innenteils 1 weist das Außenteil 2 eine Aufnahmebohrung 31 mit mehreren Abschnitten auf, deren Innendurchmesser an die Außendurchmesser der Abschnitte des Einsteckendes 5 des Innenteils 1 angepasst sind. Angrenzend an die Einstecköffnung enthält die Aufnahmebohrung 31 eine ringförmige Ausnehmung 32, in der das Halteelement 3 angeordnet ist. Die radiale Tiefe der Ausnehmung 32 ist so bemessen, dass das Halteelement 3 vollständig in die Ausnehmung 32 verdrängt werden kann. Die in Einsteckrichtung hintere Seitenwand 33 der Ausnehmung 32 erstreckt sich senkrecht zur Längsachse der Aufnahmebohrung 31. Die in Steckrichtung vordere Seitenwand 34 der Ausnehmung 32 weist eine als 30°-Fase ausgebildete Anlagefläche 35 für das Halteelement 3 in der Verriegelungsstellung auf. Das Halteelement 3 ist wie das Abstützelement 12 als geschlitzter Runddraht-Sprengring ausgebildet. Im entspannten Zustand hat das Halteelement 3 einen Innendurchmesser, der mit dem Durchmesser der Zylinderfläche 10 des Einsteckendes 5 im Wesentlichen übereinstimmt. In dem der Einstecköffnung abgekehrten Ende der Aufnahmebohrung 31 ist ein Rohrende 36 durch Bördeln befestigt.

Zum Verbinden von Innenteil 1 und Außenteil 2 wird das Einsteckende 5 in die Aufnahmebohrung 31 gesteckt, wobei das Federelement 25 an die Stirnfläche des Außenteils 2 anstößt, vgl. Figur 3. Durch Erhöhung der in Steckrichtung auf das Innenteil 1 einwirkenden Steckkraft und Abstützen des Außenteils 2 in der Gegenrichtung wird in der nächsten Phase des Steckvorgangs das Abstützelement 12 in das Haltelement 3 hinein gedrückt, welches dabei aufgeweitet wird, vgl. Figur 4. Das an dem Außenteil 2 anliegende Federelement 25 wird auf dem an der Schulter 14 abgestützten Löseelement 21 in Richtung des Flansches 27 verschoben, wodurch sich der Abstand zwischen dem Flansch 27 und dem Federelement 25 verringert und der Indikatorring 30 radial nach außen in Richtung des Scheitelabschnitts 28 gedrückt wird.

Wenn die in Figur 4 gezeigte Stellung des Innenteils 1 in Bezug auf das Außenteil 2 erreicht ist, nimmt der der Steckkraft entgegen gerichtete Widerstand des Halteelements 3 erheblich ab, so dass unter der Wirkung des Kraftüberschusses in Steckrichtung das Innenteil 1 sprungartig bis in die Stellung im Außenteil 2 getrieben wird, in der sich das Innenteil 1 mit dem Abstützelement 12 an der in Steckrichtung hinteren Wand der Ausnehmung 32 des Außenteils 2 abstützt. Ein tieferes Eindringen des Innenteils 1 in die Aufnahmebohrung 31 ist nicht mehr möglich und der aktive Steckvorgang ist beendet. Das Innenteil 1 wird bei der Bewegung in diese tiefste Stellung so weit gegenüber dem Außenteil 2 verschoben, dass der Indikatorring 30 durch das dem Flansch 27 weiter angenäherte Federelement 25 über den Scheitelabschnitt 28 hinweg gedrückt wird, wodurch der Indikatorring 30 sich zusammenziehend über die Ringschulter 16 legt und den dort angeordneten Signalring 18 vollständig bedeckt. Das Federelement 25 wird bei diesem Vorgang auf den konischen Abschnitt 26 geschoben und dadurch stärker gespannt. Das gespannte Federelement 25 drückt daher das Innenteil 1, wenn es losgelassen wird, so weit gegenüber dem Außenteil 2 nach außen zurück, bis das Abstützelement 12 an dem Halteelement 3 und dieses an der Anlagefläche 35 mit dann noch verbleibender Federkraft anliegt. Dieser sich nach Beendigung des Steckvorgangs einstellende Verbindungszustand ist in Figur 5 gezeigt.

Die Verlagerung des Indikatorrings 30 tritt zuverlässig ein, wenn das Innenteil bis über die in Figur 4 gezeigt Stellung hinaus bewegt wird. Hierdurch ist sichergestellt, dass nur dann durch Verlagerung des Indikatorrings 30 eine Verbindungsanzeige erfolgt, wenn Außenteil 2 und das Innenteil 1 richtig zusammengesteckt und verbunden sind. Der Indikatorring 30 befindet sich in dem Verbindungszustand auf der dem Außenteil 2 abgewandten Seite des Flansches 27 und umschließt die Ringschulter 16 mit dem Signalring 18. Dieses kann visuell und haptisch gut erkannt und geprüft werden. Die Klemmhülse 20 bildet eine dem Flansch 27 gegenüberliegende Schulter, durch die der Indikatorring 30 in der Anzeigeposition gehalten wird. Alternativ kann auch das Innenteil mit eine Schulter oder ähnlichem Mittel versehen sein.

Das Lösen der Steckverbindung kann erreicht werden, indem das Innenteil 1 und mit diesem das Löseelement 21 unter elastischer Verformung des Federelements 25 beispielsweise mittels eines Werkzeugs in die Aufnahmebohrung 31 hineingedrückt werden. Hierbei wird das Halteelement 3 von der Axialkraft des Federelements 25 entlastet und durch das Löseelement 21 in der Ausnehmung 32 so weit verschoben, bis es an der Seitenwand 34 zur Anlage kommt. Durch das weitere Hineindrücken des Löseelements 21 und gleichzeitiges Herausziehen des Innenteils 1 überspringt das Halteelement 3 das Abstützelement 12 und gibt das Innenteil 1 frei, so dass es vom Außenteil 2 entfernt werden kann.

## Patentansprüche

1. Steckverbindung für Rohrleitungen mit einem rohrförmigen Innenteil (1) und einem eine Öffnung aufweisenden Außenteil (2), wobei das Innenteil (1) mit einem Einsteckende (5) voran in die Öffnung des Außenteils (2) einsteckbar und in einer Verbindungsstellung in der Öffnung des Außenteils (2) mittels eines in radialer Richtung verformbaren Halteelements (3) mit dem Außenteil (2) verbindbar ist, wobei das Innenteil (1) über die Verbindungsstellung hinaus etwas tiefer in die Öffnung des Außenteils (2) hinein bewegbar ist und wobei ein elastisch aufweitbarer Indikatorring (30) vor dem Verbinden des Innenteils (1) mit dem Außenteil (2) in einer Bereitschaftsposition auf dem Innenteil (1) angeordnet ist und beim Verbinden des Innenteils (1) mit dem Außenteil (2) aus der Bereitschaftsposition in eine Anzeigeposition verlagert werden kann, wobei das Innenteil (1) einen zwischen der Bereitschaftsposition und der Anzeigeposition angeordneten Scheitelabschnitt (28) aufweist und der Indikatorring (30) im nicht aufgeweiteten Zustand einen Innendurchmesser hat, der kleiner ist als der Außendurchmesser des Scheitelabschnitts (28), wobei auf dem Innenteil (1) ein Löseelement (21) axial verschiebbar angeordnet ist, durch welches das Halteelement (3) aus der Verbindungsstellung in eine Lösestellung bewegbar ist, wobei das Löseelement (21) einen radialen Flansch (27) aufweist, an dem der Indikatorring (30) anliegt, wenn er in der Bereitschaftsposition angeordnet ist, und wobei zwischen dem Flansch (27) und dem Außenteil (2) ein Federelement (25) angeordnet ist, welches das Löseelement (21) ringförmig umgreift und einem Eindringen des Löseelements (21) in das Außenteil (2) entgegenwirkt, **dadurch gekennzeichnet, dass** der Flansch (27) mit einem radial äußeren Rand den Scheitelabschnitt (28) bildet, dass der Indikatorring (30) in der Bereitschaftsposition zwischen dem Flansch (27) und dem Federelement (25) angeordnet ist und beim Verbinden des Innenteils (1) mit dem Außenteil (2) durch das Federelement (25) aus der Bereitschaftsposition in die Anzeigeposition verlagert werden kann, die auf der dem Federelement (25) abgewandten Seite des Flansches (27) liegt.

2. Steckverbindung nach Anspruch 1, **dadurch gekennzeichnet, dass** das Innenteil (1) auf seiner Außenseite in einem von dem Indikatorring (30) in der Anzeigeposition verdeckten Bereich eine farblich gekennzeichnete Signalfläche aufweist.

3. Steckverbindung nach Anspruch 2, **dadurch gekennzeichnet, dass** die Signalfläche von der Außenfläche eines Signalrings (18) gebildet ist, der in einer Nut (17) in der Außenseite des Innenteils (1) angeordnet ist.

4. Steckverbindung nach Anspruch 3, **dadurch gekennzeichnet, dass** der Signalring (18) mit einem Teil seiner Mantelfläche aus der Nut (17) herausragt.

5. Steckverbindung nach einem der vorhergehenden Ansprüche, **dadurch gekennzeichnet, dass** der Indikatorring (30) ein O-Ring aus Elastomer ist.

6. Steckverbindung nach Anspruch 5, **dadurch gekennzeichnet, dass** der Innendurchmesser des O-Rings im entspannten Zustand 10% bis 30% kleiner ist als der Außendurchmesser des Scheitelabschnitts (28).

7. Steckverbindung nach einem der Ansprüche 1 bis 4, **dadurch gekennzeichnet, dass** der Indikatorring (30) ein geschlitzter Ring aus Metall oder Kunststoff ist.

8. Steckverbindung nach einem der vorhergehenden Ansprüche, **dadurch gekennzeichnet, dass** das Federelement (25) ein elastischer Dichtring aus Elastomer ist, der einen kleineren Durchmesser als der Indikatorring (30) hat.

9. Steckverbindung nach einem der vorhergehenden Ansprüche, **dadurch gekennzeichnet, dass** das Löseelement (21) einen konischen, sich in Richtung des Einsteckendes des Innenteils (1) verjüngenden Abschnitt (26) hat, wobei sich an den großen Durchmesser des konischen Abschnitts (26) der Flansch (27) anschließt, der sich radial nach außen erstreckt.

10. Steckverbindung nach einem der vorhergehenden Ansprüche, **dadurch gekennzeichnet, dass** das Innenteil (1) auf der dem Federelement (25) abgewandten Seite des Flansches (27) und in einem Abstand von dem Flansch (27) eine sich radial nach außen erstreckende Schulter aufweist, die den Indikatorring (30) am Verlassen der Anzeigestellung hindert.

11. Steckverbindung nach Anspruch 10, **dadurch gekennzeichnet, dass** die Schulter von einem an dem Innenteil (1) befestigten Anschlusselement gebildet ist.

## Claims

1. Plug-in connector for pipelines, comprising a tubular inner part (1) and an outer part (2) having an opening, it being possible to insert an insertion end (5) of the inner part (1) into the opening of the outer part (2) and to connect the inner part, in a connecting position in the opening of the outer part (2), to the outer part (2) by means of a holding element (3) that is deformable in the radial direction, the inner part (1) being movable slightly further into the opening of the outer part (2) beyond the connecting position and an elastically expandable indicator ring (30) being arranged, in a ready position, on the inner part (1) before the inner part (1) is connected to the outer part (2) and being able to be moved, when the inner part (1) is connected to the outer part (2), out of the ready position into an indication position, the inner part (1) comprising an apex portion (28) arranged between the ready position and the indication position and the indicator ring (30), when not expanded, having an inner diameter that is smaller than the outer diameter of the apex portion (28), a release element (21) being arranged on the inner part (1) so as to be axially movable, by means of which release element the holding element (3) can be moved from the connecting position into a release position, the release element (21) comprising a radial flange (27) against which the indicator ring (30) rests when said ring is in the ready position, and a spring element (25) being arranged between the flange (27) and the outer part (2), which spring element annularly encompasses the release element (21) and counteracts penetration of the release element (21) into the outer part (2), **characterised in that** a radially outer edge of the flange (27) forms the apex portion (28), **in that** the indicator ring (30) is arranged, in the ready position, between the flange (27) and the spring element (25) and can be moved, when the inner part (1) is connected to the outer part (2), out of the ready position into the indication position by means of the spring element (25), which indication position is on the side of the flange (27) facing away from the spring element (25).

2. Plug-in connector according to claim 1, **characterised in that** the inner part (1) has a colour-coded signal surface on the outside thereof in a region that is covered by the indicator ring (30) in the indication position.

3. Plug-in connector according to claim 2, **characterised in that** the signal surface is formed by the outer surface of a signal ring (18) that is arranged in a groove (17) in the outside of the inner part (1).

4. Plug-in connector according to claim 3, **characterised in that** part of the lateral surface of the signal ring (18) protrudes from the groove (17).

5. Plug-in connector according to any of the preceding claims, **characterised in that** the indicator ring (30) is an O-ring made of an elastomer.

6. Plug-in connector according to claim 5, **characterised in that** the inner diameter of the O-ring in the stress-relieved state is 10% to 30% smaller than the outer diameter of the apex portion (28).

7. Plug-in connector according to any of claims 1 to 4, **characterised in that** the indicator ring (30) is a slotted ring made of metal or plastics material.

8. Plug-in connector according to any of the preceding claims, **characterised in that** the spring element (25) is a resilient sealing ring made of an elastomer, which has a smaller diameter than the indicator ring (30).

9. Plug-in connector according to any of the preceding claims, **characterised in that** the release element (21) comprises a conical portion (26) that tapers towards the insertion end of the inner part (1), the flange (27) that extends radially outwards adjoining the large diameter of the conical portion (26).

10. Plug-in connector according to any of the preceding claims, **characterised in that** the inner part (1) comprises, on the side of the flange (27) facing away from the spring element (25) and at a distance from the flange (27), a shoulder that extends radially outwards and prevents the indicator ring (30) from leaving the indication position.

11. Plug-in connector according to claim 10, **characterised in that** the shoulder is formed by a connection element that is fastened to the inner part (1).

## Revendications

1. Raccord enfichable pour tuyauteries comprenant une partie intérieure (1) tubulaire et une partie extérieure (2) présentant une ouverture, la partie intérieure (1) pouvant être insérée avec une extrémité d'insertion (5) en premier dans l'ouverture de la partie extérieure (2) et pouvant être reliée, dans une position de raccordement dans l'ouverture de la partie extérieure (2), à la partie extérieure (2) au moyen d'un élément de retenue (3) qui peut se déformer en direction radiale, la partie intérieure (1) pouvant être déplacée dans l'ouverture de la partie extérieure (2) légèrement plus profondément que la position de raccordement, et une bague indicatrice (30) élastiquement étirable étant disposée sur la partie intérieure (1) dans une position d'attente avant que la partie intérieure (1) soit reliée à la partie extérieure (2), et pouvant être déplacée depuis la position d'attente dans une position de visualisation lors de la liaison de la partie intérieure (1) avec la partie extérieure (2), la partie intérieure (1) présentant une partie de crête (28) disposée entre la position d'attente et la position de visualisation, et la bague indicatrice (30) ayant un diamètre intérieur à l'état non étiré qui est plus petit que le diamètre extérieur de la section de crête (28), un élément de déverrouillage (21) étant disposé sur la partie intérieure (1) en étant déplaçable axialement et au moyen duquel l'élément de retenue (3) peut être déplacé de la position de liaison dans une position de déverrouillage, l'élément de déverrouillage (21) présentant une bride radiale (27) sur laquelle repose la bague indicatrice (30) quand elle est en position d'attente, et un élément ressort (25) étant disposé entre la bride (27) et la partie extérieure (2), lequel entoure de façon annulaire l'élément de déverrouillage (21) et empêche la pénétration de l'élément de déverrouillage (21) dans la partie extérieure (2), **caractérisé en ce que** la bride (27) forme, avec un bord radialement extérieur, la partie de crête (28), **en ce que** la bague indicatrice (30), en position d'attente, est disposée entre la bride (27) et l'élément ressort (25) et peut être déplacée par l'élément ressort (25), lors de la liaison de la partie intérieure (1) avec la partie extérieure (2), de la position d'attente dans la position de visualisation qui se trouve du côté de la bride (27) opposé à l'élément ressort (25).

2. Raccord enfichable selon la revendication 1, **caractérisée en ce que** la partie intérieure (1) présente sur sa face extérieure, dans une zone cachée par la bague indicatrice (30) en position de visualisation, une surface de signalisation codée par couleur.

3. Raccord enfichable selon la revendication 2, **caractérisée en ce que** la surface de signalisation est formée par la surface extérieure d'une bague de signalisation (18) disposée dans une rainure (17) dans la face extérieure de la partie intérieure (1).

4. Raccord enfichable selon la revendication 3, **caractérisée en ce que** la bague de signalisation (18) dépasse de la rainure (17) avec une partie de sa surface d'enveloppe.

5. Raccord enfichable selon l'une des revendications précédentes, **caractérisé en ce que** la bague indicatrice (30) est un joint torique en élastomère.

6. Raccord enfichable selon la revendication 5, **caractérisé en ce que** le diamètre intérieur du joint torique à l'état détendu est inférieur de 10 à 30 % au diamètre extérieur de la partie de crête (28).

7. Raccord enfichable selon l'une des revendications 1 à 4, **caractérisé en ce que** la bague indicatrice (30) est un anneau fendu en métal ou en matière plastique.

8. Raccord enfichable selon l'une des revendications précédentes, **caractérisé en ce que** l'élément ressort (25) est une bague d'étanchéité élastique en élastomère qui a un diamètre plus petit que la bague indicatrice (30).

9. Raccord enfichable selon l'une des revendications précédentes, **caractérisé en ce que** l'élément de déverrouillage (21) présente une section conique (26) qui se rétrécit en direction de l'extrémité d'insertion de la partie intérieure (1), le grand diamètre de la section conique (26) se poursuivant par la bride (27) qui s'étend radialement vers l'extérieur.

10. Raccord enfichable selon l'une des revendications précédentes, **caractérisé en ce que** la partie intérieure (1) présente, sur le côté de la bride (27) opposé à l'élément ressort (25) et à distance de la bride (27), un épaulement s'étendant radialement vers l'extérieur qui empêche la bague indicatrice (30) de quitter la position de visualisation.

11. Raccord enfichable selon la revendication 10, **caractérisé en ce que** l'épaulement est formé par un élément de jonction fixé sur la partie intérieure (1).
